# EUROPÄISCHE PATENTSCHRIFT

(11) **EP 3 512 334 B1**
(45) Veröffentlichungstag und Bekanntmachung des Hinweises auf die Patenterteilung: **04.11.2020**
(21) Anmeldenummer: 17780299.8
(22) Anmeldetag: 15.09.2017
(51) Int. Cl.: A01M 7/00

(54) **VORRICHTUNG ZUM BESPRITZEN VON OBSTBÄUMEN**
ATOMISER FOR FRUIT TREES
PULVÉRISATEUR POUR ARBRES FRUITIERS

(30) Priorität: 16.09.2016 DE 102016117471
(43) Veröffentlichungstag der Anmeldung: 24.07.2019
(73) Patentinhaber: Spies, Klaus, 52076 Aachen (DE)
(72) Erfinder: Spies, Klaus, 52076 Aachen (DE)
(74) Vertreter: Osterhoff, Utz
(86) Internationale Anmeldenummer: PCT/DE2017/100789
(87) Internationale Veröffentlichungsnummer: WO 2018/050170

(56) Entgegenhaltungen:
- EP-A1- 2 689 662
- WO-A1-2011/048593
- DE-A1- 1 482 366
- DE-A1- 10 318 431
- DE-T2- 69 904 998
- FR-A1- 2 607 029
- NL-C- 1 039 524

## Beschreibung

Die vorliegende Erfindung betrifft eine Vorrichtung zum Bespritzen von Obstpflanzen, insbesondere Apfelbäumen, gemäß den Merkmalen im Oberbegriff von Patentanspruch 1.

Das Streben nach besserer Qualität und höherer Wirtschaftlichkeit hat beim Anbau von Obst über Jahrzehnte hinweg von den großen, zum Teil recht alten Obstbäumen zu Plantagen mit Obstbaumreihen geführt, in denen meist schlanke bis zu 3 m hohe Bäume von 1 bis 1,5 m Durchmesser dicht nebeneinander stehen und eine große Anzahl eng beieinander wachsender Früchte tragen. Die hierzu notwendigen Züchtungen haben gegenüber den früheren Obstbäumen zu einer erhöhten Empfindlichkeit gegenüber Schädlingen und Pilzen geführt. Das macht ein sehr häufiges, intensives Spritzen mit Pflanzenschutzmitteln erforderlich.

Bei Äpfeln wird bis zu 25 mal im Jahr gespritzt, im Weinbau ist die Spritzhäufigkeit etwas geringer. Dabei hat sich im Laufe der Jahre eine Verfahrenstechnik als ausschließlich benutzte Methode durchgesetzt, bei welcher ein Traktor mit angehängtem Spritzmitteltank mit einer Geschwindigkeit von vorzugsweise 8 bis 12 km/h durch die Obstbaum- bzw. Weinstockreihen fährt und seitlich in einer Ebene senkrecht zur Fahrtrichtung einen Spritzmittelnebel aus feinen Tröpfchen erzeugt. Dabei liefert ein axial am hinteren Ende des Spritzmitteltanks angeordneter Ventilator einen über Leitschaufeln seitlich in die Spritzebene gerichteten starken Luftstrom, in den das Spritzmittel durch eine größere Zahl von Düsen mit Drücken vorzugsweise zwischen 0,5 und 0,8 MPa hineingegeben wird. Dabei erfolgt die Verwirbelung zu einem weitgehend homogenen Tröpfchennebel unmittelbar an und hinter den Leitschaufeln.

Da sich die Leitschaufeln in einem Abstand von 1 bis 1,5 m zur äußeren Kontur der Obstbäume bzw. Weinstöcke befinden, geht ein großer Teil des Spritznebels als Abdrift verloren. Im Obstbau kann das nachgewiesenermaßen bis zu 70% sein, im Weinbau ist es etwas weniger. Das führt wegen der hohen Kosten für das als Abdrift verloren gehende Spritzmittel nicht nur zu hohen wirtschaftlichen Belastungen, sondern vor allem auch zu einer Umweltbelastung, die in vielen Anbaugebieten nicht mehr hingenommen werden kann.

Zahlreiche wissenschaftliche Untersuchungen und Verbesserungen befassen sich damit, die Ventilatoren, die Düsenform und -anordnungen sowie die Leitschaufeln zu verbessern, aber stets wird das Grundprinzip beibehalten, welches die Ursache für die hohe Abdrift ist.

Aus der WO 2011/048593 A1 ist eine Vorrichtung zum Bespritzen von Obstbäumen bekannt.

Ferner sind aus den Dokumenten DE 699 04 998, DE 14 82 366 A1, FR 2 607 029 A1, DE 103 18 431 A1, NL 1 039 524 und EP 2 689 662 A1 Vorrichtungen zum Einsatz von Spritzmittel an Obstbäumen bekannt.

Die Erfindung hat es sich zur Aufgabe gestellt, die vorbeschriebenen Nachteile mit einer neuartigen Maschinen- und Verfahrenstechnik zu beseitigen und dabei optional die Möglichkeit zu bieten, die bei den Obst- und Weinbauern vorhandenen Geräte weitgehend zu nutzen.

Die zuvor genannte Aufgabe wird erfindungsgemäß mit einer Vorrichtung zum Bespritzen von Obstpflanzen gemäß den Merkmalen von Patentanspruch 1 gelöst. Vorteilhafte Ausgestaltungsvarianten der vorliegenden Erfindung sind Gegenstand der abhängigen Patentansprüche.

Die erfindungsgemäße Vorrichtung zum Bespritzen von Obstpflanzen, insbesondere von Apfelbäumen weist ein Fahrgestell mit einem Tank, einem Druckerzeuger und Spritzdüsen zum Aufbringen eines Spritzmittels auf. Erfindungsgemäß zeichnet es sich dadurch aus, dass die Obstpflanzen direkt bzw. unmittelbar in kurzer Entfernung angespritzt werden. Das Aufbringen des Spitzmittels mittels der umweltbelastenden Gebläsetechnik bzw. mittels eines Luftstromes wird erfindungsgemäß vermieden. Hierzu ist vorgesehen, dass auf einem Fahrgestell eine Montageplatte angeordnet ist und auf der Montageplatte in ihrer Lage verstellbare Arme angeordnet sind. Die Montageplatte kann auch an dem Fahrgestell, sowohl bei erstausgerüsteten Fahrzeugen selbst ausgebildet sein, jedoch auch nachgerüstet werden. Die Montageplatte bietet jedoch insbesondere die Möglichkeit ein vorhandenes Fahrzeug nachzurüsten.

An einem Ende eines jeden Armes sind in ihrer Kontur verstellbare längliche Leisten und/oder Platten angeordnet. In einem Abstand zueinander sind an den Leisten und/oder Platten Spritzdüsen angeordnet. Die Leisten und/oder Platten sind in ihrer Kontur an die zu besprühenden Obstpflanzen einstellbar. Das Einstellen erfolgt durch Anpassen. Hierdurch wird es ermöglicht, in einem Abstand zwischen 1 und 100 cm, bevorzugt zwischen 10 und 50 cm, die Spritzdüsen bis an die Obstpflanzen insbesondere die Außenkontur der Obstpflanzen heranzubringen. Die Spritzdüsen arbeiten dann bei einem Betriebsdruck zwischen 8 und 20 MPa. Hierzu ist ein Druckerzeuger, beispielsweise eine Druckpumpe angeordnet, die das in dem Tank bevorratete Spritzmittel auf den entsprechenden Betriebsdruck bringt. Durch die Spritzdüsen wird dann das Spritzmittel ausgebracht. Bei Austritt aus den Düsen werden kleine Tröpfchen gebildet, so dass ein Spritznebelstrom, auch Drucknebel genannt, gebildet wird, der in die Obstpflanze hereinströmt. Das Spritzmittel ist somit fein zerstäubt und legt sich auf den Obstpflanzen und hier insbesondere dem Obst und auch auf den Zweigen und Blättern nieder.

Dadurch, dass das Spritzmittel nahezu unmittelbar an den Obstpflanzen aufgebracht wird, kann kaum eine Abdrift entstehen. Eine Abdrift auf die Vertikalrichtung bezogen oberhalb und unterhalb der Obstpflanze wird hierdurch erfindungsgemäß vermieden und die gesamte Abdrift stark reduziert.

Dazu wird in einem geringen Abstand, bevorzugt von 20 bis 50 cm von den Außenkonturen der Obstbäume bzw. Weinstöcke durch Hochdruckdüsen ein bewegter Sprühnebel (Spray) erzeugt, der direkt in die Pflanzen hineinströmt, so dass schon durch diese Maßnahme die Abdrift ganz erheblich vermindert wird. Dabei werden die Düsen reihenförmig auf Leisten und/oder Platten angeordnet. Die Leisten und/oder Platten sind der äußeren Kontur der Pflanzen angepasst. Im Querschnitt ist es somit möglich, dass die Platten bzw. Leisten gekrümmt ausgebildet sind. Auch können die Platten und/oder Leisten im Querschnitt haubenartig die Obstpflanzen übergreifen, so dass ein möglichst großer Teil des Umfanges im Querschnitt der Obstpflanze von der Leiste bzw. Platte umschlossen sind. Entsprechend kann das Spritzmittel auf die Obstpflanze aufgebracht bzw. in die Obstpflanze hineingebracht werden.

Die Spritzmitteldrücke liegen dabei in der Größenordnung von 8 bis 20 MPa. Die Erzeugung des Luftstromes zur Verwirbelung erfolgt im Gegensatz zu der aus dem Stand der Technik bekannten Methode dadurch, dass die hohe Austrittsgeschwindigkeit des Spritzmittels aus den Düsen die Umgebungsluft mitreißt und dass die damit verbundene Verwirbelung einen gezielten und gebündelten Drucknebelstrom mit der benötigten Tröpfchengröße erzeugt.

Durch zwischen den Leisten bzw. Platten angeordnete, sich ebenfalls über die gesamte Außenkontur der Pflanzen erstreckende Folien wird erreicht, dass der Spritzvorgang hinter einer einseitigen Schutzwand oder zwischen zwei beidseitig an den Pflanzen entlang fahrenden, vorzugsweise 2 bis 4 m langen Schutzwänden erfolgt, wodurch die Abdrift auf nahezu Null reduziert wird.

Die Leisten bzw. Platten sind auf gelenkigen Armen ebenfalls gelenkig angeordnet, damit die Obst- bzw. Weinbauern stets den notwendigen geringen Abstand zu den Außenkonturen der Pflanzen einhalten können. Die Arme können dabei manuell in ihrer Lage eingestellt werden, so dass bei Durchfahren zwischen zwei Reihen von Obstpflanzen der ideale Abstand der Obstpflanze zu den Leisten bzw. Platten eingestellt werden kann. Die Leisten bzw. Platten können ebenfalls nochmals in ihrer Kontur an die Außenkontur der Obstpflanze eingestellt werden. Insbesondere bei Apfelbäumen ist dies eine elliptisch gekrümmte Querschnittskontur.

Auch ist es vorstellbar, dass Manipulatorarme verwendet werden, die zumindest teilmechanisiert aber auch automatisch während des Durchfahrens und Spritzvorganges den Abstand steuern bzw. regeln, so dass stets ein optimaler Abstand von Austritt des Spritzmittels aus den Düsen sowie Eintritt in die Obstpflanze gewährleistet ist.

Um die große Zahl der in Nutzung befindlichen Spritzfahrzeuge weiter verwenden und den Übergang auf die neue Technologie durch eine Umbaumaßnahme erreichen zu können, werden die Arme dreh- und schwenkbar auf einer bevorzugt U-förmigen, den Spritzmitteltank umschließenden Montageplatte angeordnet, so dass das Spritzen - wie bisher - nach beiden Seiten möglich ist. Dabei befindet sich die Pumpe zur Erzeugung des Spritzmitteldruckes vorzugsweise mittig am rückwärtigen Ende des Druckmitteltanks, wo beim herkömmlichen Spritzen der Ventilator angeordnet ist.

In weiterer Fortführung des grundsätzlichen Erfindungsgedankens ist es auch möglich, brückenförmige Ausleger auf den Schenkeln der U-förmigen Montageplatte anzuordnen, die an ihren freien Enden ebenfalls Arme tragen, an denen vorzugsweise symmetrisch die gleichen Düsenleisten bzw. -platten mit dazwischen angeordneten Folien befestigt sind. Dadurch erfolgt der Spritzvorgang in einem Tunnel, so dass eine Abdrift nahezu ausgeschlossen wird.

Weitere Vorteile, Merkmale, Eigenschaften und Aspekte der vorliegenden Erfindung sind Gegenstand der nachfolgenden Beschreibung. Bevorzugte Ausgestaltungsvarianten werden in den schematischen Figuren dargestellt. Diese dienen dem einfachen Verständnis der Erfindung. Es zeigen:
- Figur 1a und b: eine Rückansicht sowie eine Draufsicht auf eine erfindungsgemäße Vorrichtung,
- Figur 2a und b: eine Seitenansicht auf eine erfindungsgemäße Leiste mit Spritzdüse in gerader Form sowie an die Kontur angepasster Form,
- Figur 3: eine segmentiert ausgebildete Leiste,
- Figur 4a bis c: in Seiten- und Frontansicht eine alternative Ausgestaltungsvariante eines an die Kontur der Obstwanne einstellbaren Armes,
- Figur 5: eine erfindungsgemäße Vorrichtung mit Auslegern,
- Figur 6a und b: ein Verfahren zur Durchführung des Spritzens und
- Figur 7: eine Detaildarstellung eines verstellbaren Armes.

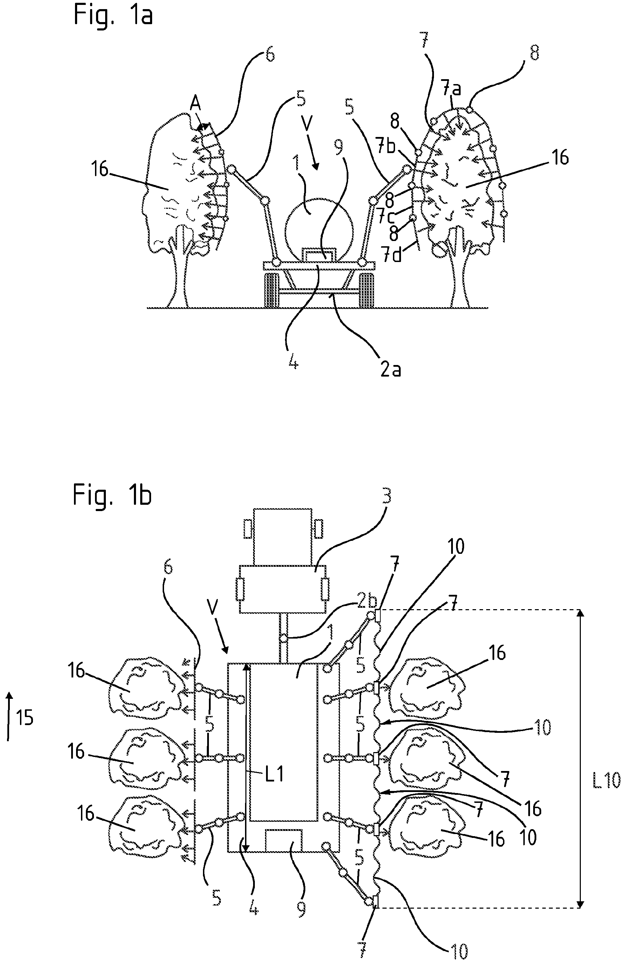

Fig. 1b zeigt die Draufsicht auf einen vorzugsweise einachsigen fahrbaren Tank 1, angeordnet an einem Fahrgestell 2a, der über eine Deichsel 2b lenkbar mit einem Traktor 3 verbunden ist. Figur 1a zeigt eine Rückansicht. Beim Spritzen fährt dieses Gespann mit 5 bis 20 km/h durch die in Reihe angeordneten Obstbäume 16. Der Tank 1 ist von einer U-förmigen Montageplatte 4 umgeben, auf der beidseitig gelenkige Arme 5 dreh- und schwenkbar angeordnet sind. Es ist sinnvoll, auf jeder Seite mindestens drei Arme 5 anzuordnen, unter bestimmten Bedingungen kann es aber auch vorteilhaft sein, vier Arme 5 auf jeder Seite anzubringen. An den freien Enden der Arme 5 ist eine Einrichtung angebracht, die entsprechend der Außenkontur der Obstbäume 16 bzw. Weinstöcke anpassbar ist und den mit Pflanzenschutzmitteln zu besprühenden Teil konturgenau in einem Abstand A bis zu 50 cm umschließt.

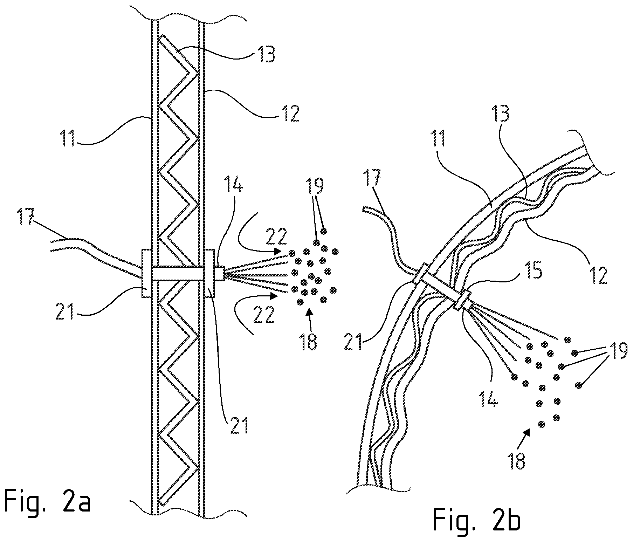

Auf der linken Seite von Fig. 1a und 1b besteht die Einrichtung aus einer verformbaren Platte 6, auf der rechten Seite aus in Segmente 7a, 7b, 7c, 7d aufgeteilten Leisten 7, die durch Gelenke 8 miteinander verbunden sind und in eine Form gebracht werden können, die der Außenkontur der mit Spritzmittel zu behandelnden Obstbäume 16 bzw. Weinstöcke entspricht. Gemäß Figur 1a können angedeutet auch auf der am Tank 1 gegenüberliegenden Seite der Obstbäume 16 Leisten 7 angeordnet sein, so dass die Obstbäume 16 beidseitg bespritzt werden. Eine einteilige verformbare Platte 6 wird in ihrem konstruktiven Aufbau in Fig. 2a und b beschrieben.

Bei der aus einzelnen Segmenten 7a, 7b, 7c, 7d gelenkig zusammengesetzten Leiste- 7 bzw. einer gelenkig zusammengesetzten Platte ermöglichen es die Gelenke 8 mit den Segmenten 7a, 7b, 7c, 7d, die Außenkontur der Obstbäume 16 nachzubilden und die Formgebung zu arretieren.

Die Leisten 7 bzw. Platten 6 tragen eine große Zahl von übereinander und/oder nebeneinander angeordneten Spritzdüsen, nachfolgend auch Düsen 14 genannt, durch welche der Drucknebelstrom erzeugt wird. Dabei wird der notwendige Druck von 8 bis 20 MPa durch eine Pumpe 9 erzeugt, die auf der U-förmigen Montageplatte 4 angeordnet ist und vorzugsweise durch eine nicht dargestellte Kardanwelle direkt mechanisch vom Traktor 3 angetrieben wird oder elektrisch bzw. hydraulisch angetrieben wird.

Der hohe Druck hat zur Folge, dass das Spritzmittel mit sehr hoher Geschwindigkeit aus den Düsen 14 kleinen Durchmessers austritt, wodurch die umgebende Luft mitgerissen und das Spritzmittel in einen Drucknebelstrom mit einer Tröpfchengröße verwandelt wird. Die Tröpfchengröße des Spitzmittels in den Drucknebelstrom liegt bevorzugt in einem Tröpfchenspektrum zwischen 1 und 500 µm. Besonders vorteilhaft ist ein mittlerer volumenbezogener Tröpfchendurchmesser von 80 bis 500 µm, insbesondere 100 bis 400 µm, bevorzugt 100 bis 300 µm, besonders bevorzugt von 150 ist 250 µm. Insbesondere sind mehr als 90%, ganz besonders bevorzugt mehr als 95% der Tröpfchen mit ihrer Tröpfchengröße in dem Drucknebelstrom in den oben genannten Intervallgrenzen. Die Geschwindigkeit des Drucknebels bewirkt ein sehr gutes Eindringen in die Obstbäume bzw. Weinstöcke und bei Belaubung ein Bewegen der Blätter, so dass eine allseitige Benetzung insbesondere des Obstes erfolgt.

Im Grundriss ist in den beiden unterschiedlichen Darstellungen (rechte und linke Seite) ein weiteres wichtiges erfindungsgemäßes Merkmal einer Schutzwand dargestellt. Aus den Platten 6 wird gemäß linker Darstellung in Längsrichtung 15 eine geschlossene bzw. nahezu geschlossene Wand gebildet, die an der Außenkontur der Obstbäume 16 entlang fährt und die Abdrift auf ein Mindestmaß reduziert. Auf der rechten Seite der Darstellung befindet sich in Längsrichtung 15 zwischen den mit Düsen 14 besetzen Leisten 7 jeweils eine Folie 10, die konturgenau an den Obstbäumen 16 entlang fährt und somit eine Schutzwand ausbildet. Diese Ausgestaltungsvariante kann insbesondere derart bevorzugt ausgebildet werden, dass eine Länge L10 der durch die Folien 10 ausgebildeten Schutzwand länger ist als eine Länge L1 der Vorrichtung bzw. des Spritzmittelwagens. Dies bietet insbesondere die Möglichkeit, dass eine lange Schutzwand mit gutem Sprühergebnis während des Durchfahrens der Gasse zwischen den Obstbäumen 16 vorhanden ist. Beim Wenden an einem Ende der Gasse, zum Einfahren in eine parallele Gasse, jedoch die kurze Länge L1 einen geringen Wendekreis der gesamten Vorrichtung sicherstellt. Die Länge L10 der durch die Folie 10 ausgebildeten Schutzwand kann im Wendebereich kurzzeitig reduziert werden, um das Wendemanöver durchzuführen. Hierzu kann dann der in Längsrichtung erste Arm 5 und der letzte Arm 5 in Richtung zu dem Tank 1 zurückbewegt werden.

Die erfindungsgemäße Vorrichtung kann nunmehr derart ausgebildet sein, dass beidseitig nur Platten 6 oder nur Leisten 7 angeordnet sind. Dargestellt sind hier auf der linken Seite Platten 6, auf der rechten Seite Leisten 7 zur Verdeutlichung des Erfindungsgedankens. Bei der Ausgestaltung mit Platten 6 wie auf der linken Seite dargestellt, ist die Anordnung einer Folie zwischen den Platten 6, nicht zwingend notwendig, jedoch möglich. Bei der Ausbildung mit Leisten 7, wie dargestellt an der jeweils rechten Seite, kann eine Folie zwischen den Leisten 7 angeordnet sein. Dies ist jedoch auch nicht notwendig.

Die in Figur 2a und b verformbaren, der Außenkontur der Obstbäume 16 bzw. Weinstöcke anpassbaren einteiligen Leisten 7 bzw. Platten 6, auf welchen die Düsen 14 angeordnet sind, können entweder aus einer homogenen Kunststoffplatte, einer Kunststoffplatte mit Bläscheneinschlüssen oder einer verformbaren dargestellten Gitterkonstruktion bestehen. Zwei dünne Platten 11 und 12 aus verformbarem Kunststoff sind durch Querverbindungen 13 zu einer Gitterkonstruktion miteinander verbunden. Der Kunststoff ist lediglich plastisch und hat keine elastischen Eigenschaften, so dass er nach der Verformung seine neue Form beibehält und nicht zurückfedert. In der gebogenen Situation, welche der Außenkontur der Obstbäume 16 bzw. Weinstöcke angepasst ist, wird die innere Platte 12 wellenförmig verkürzt, wobei sich auch die ursprünglich geraden Querverbindungen 13 verformen und der Abstand zwischen den Platten 11 und 12 kleiner wird. Die Düsen 14 sind über starke Scheiben 21 an den äußeren Platten 11 und 12 befestigt. Die Düsen 14 sind über Spritzmittelleitungen 17 mit der Pumpe 9 verbunden.

Die gesamte Konstruktion ist so beschaffen, dass sie sich mit menschlicher Kraft verformen und wieder zurückverformen lässt und dass sie während des Betriebes trotz des Gewichtes der Düsen 14 und der Spitzmittelleitung 17 ihre eingestellte Form behält.

Die Platten 6 bzw. Leisten 7 können auch aus einem metallischen Werkstoff, insbesondere einem reversibel plastisch verformbaren Werkstoff ausgebildet sein.

Auch können jedoch wie bereits bei Figur 1a beschrieben die Leisten 7 segmentiert, also mehrteilig, ausgebildet sein. Die einzelnen Segmente 7a, 7b, 7c, 7d sind dann über die arretierbaren Gelenke 8 miteinander verbunden. Die Segmente 7a, 7b, 7c, 7d selbst sind im Wesentlichen biegesteif, so dass eine Konturanpassung über die Verstellung und Arretierung in den Gelenken 8 erfolgt.

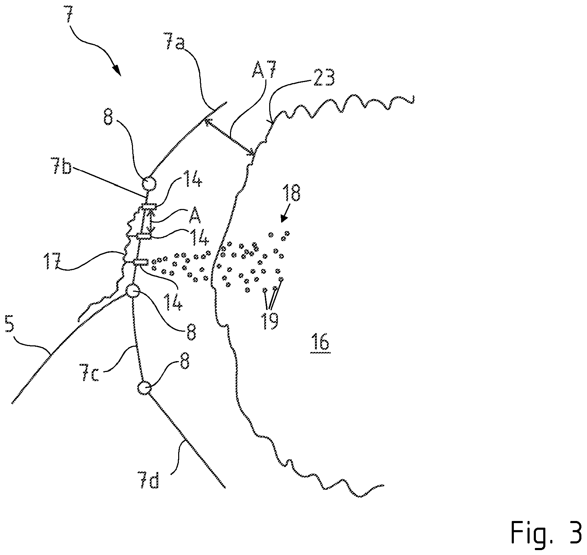

Dies ist dargestellt in Figur 3. Hierzu ist eine Leiste 7 gezeigt, die selbst aus mehreren Segmenten 7a, 7b, 7c, 7d ausgebildet ist. Die Segmente 7a, 7b, 7c, 7d sind jeweils über Gelenke 8 miteinander verbunden. Exemplarisch sind in einem Segment 7b drei Düsen 14 eingezeichnet, die in einem Abstand A zueinander angeordnet sind. Die Düsen 14 sind über eine Spritzmittelleitung 17 angeschlossen. In der Spritzmittelleitung 17 ist das Spritzmittel bereits mit Hochdruck vorhanden und wird den Düsen 14 durch die Pumpe 9 zugeführt, so dass sich bei Austritt des Spritzmittels aus der Düse 14 der in Figur 2a und b sowie 3 dargestellte Drucknebelstrom 18 bildet. In dem Drucknebelstrom 18 sind Tröpfchen 19 des ausgedüsten Spritzmittels vorhanden. Durch die hohe Austrittsgeschwindigkeit des Spritzmittels aus der Düse 14 wird die umgebende Luft mitgerissen, dargestellt durch die Pfeile 22 in Fig. 2a und es entsteht der Drucknebelstrom. Die segmentierte Leiste 7 kann derart eingestellt werden, dass jedes Segment 7a, 7b, 7c, 7d einen Abstand A7 von bevorzugt 10 bis 50 cm zu der Außenkontur 23 des Obstbaumes 16 aufweist. Der von der Düse 14 ausgebrachte Drucknebel 18 strömt somit in den Obstbaum 16 hinein und benetzt das Obst vorzugsweise homogen. Dabei entstehen Verwirbelungen, insbesondere in den Blättern des Obstbaumes 16, so dass nicht nur die jeweilige Seite des Obstes, auf welchen der Drucknebelstrom 18 auftrifft, benetzt wird, sondern auch die der hier dargestellten Leiste 7 abgewandte Seite benetzt wird.

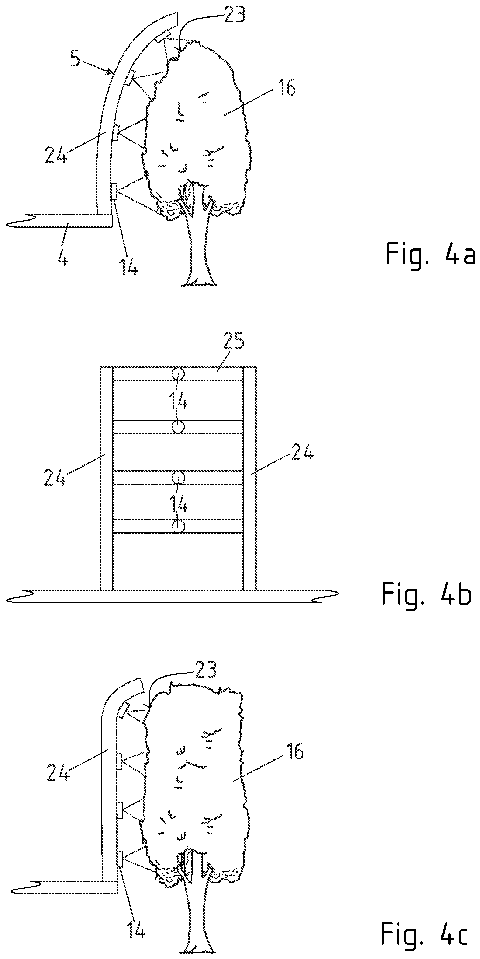

Gemäß Figur 4a ist die Montageplatte 4 mit aufgesetztem Arm 5 in Seitenansicht gezeigt. Ein an die Außenkontur 23 des Obstbaumes 16 anpassbarer Arm 5 ist ausgebildet durch einen, bevorzugt zwei flexibel einstellbare Trägerarme 24. Die Trägerarme 24 sind reversibel biegbar und können somit gemäß Figur 4c an verschiedene Außenkonturen 23 der Obstbäume 16 im Vergleich zu Figur 4a eingestellt werden. Insbesondere erfolgt das reversible Anpassen an die Außenkontur 23 durch händisches Verformen bzw. Biegen. Bevorzugt sind an den Trägerarmen 24 direkt Düsen 14 zum Ausbringen des Spritzmittels angeordnet. Alternativ sind Querbrücken 25 zwischen zwei Trägerarmen 24 angeordnet, wobei die Düsen 14 dann an den Querbrücken 25 angeordnet sind, dargestellt in Fig. 4b.

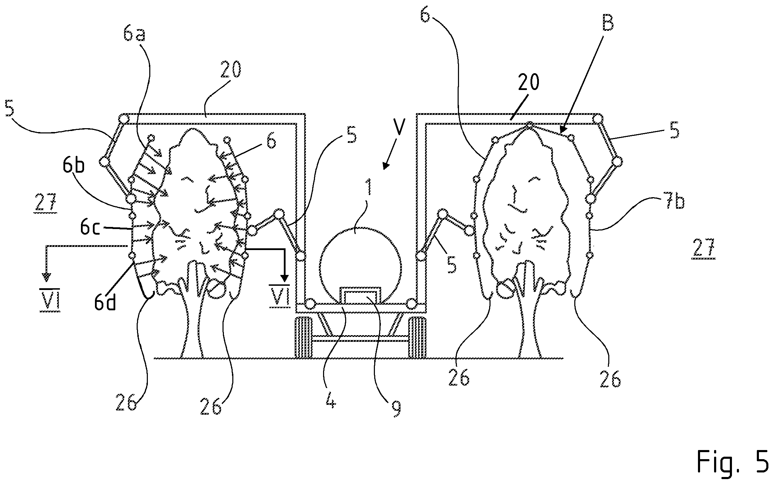

In Fig. 5 sind zwei besonders vorteilhafte Ausführungsformen der Erfindung dargestellt, bei denen fest auf der U-förmigen Montageplatte 4 befestigte Ausleger 20 die Obstbäume 16 bzw. Weinstöcke übergreifen, so dass auch auf der der Vorrichtung abgewandten Seite 27 der Obstbäume 16 bzw. Weinstöcke Platten 6 und/oder Leisten 7 bzw. Wände aus Platten bzw. Leisten 7 angeordnet werden können. Diese befinden sich dann an entsprechend angeordneten gelenkigen Armen 5. Im linken Teil der Abbildung sind die Platten 6 beidseitig angeordnet. Die Platten sind segmentiert 6a, 6b, 6c, 6d.

Im rechten Teil der Abbildung übergreifen die Platten die Obstbäume 16 im Bereich B, so dass ein im Querschnitt geschlossener Tunnel entsteht, durch welchen die Abdrift auf nahezu Null reduziert wird. An den unteren Enden der Platten können sich Sammelrinnen 26 befinden, in welchen sich überschüssiger Drucknebel als nicht an den Obstbäumen 16 haften gebliebenes Spritzmittel sammelt und durch nicht dargestellte Einrichtungen in den Tank 1 zurückgeführt werden kann.

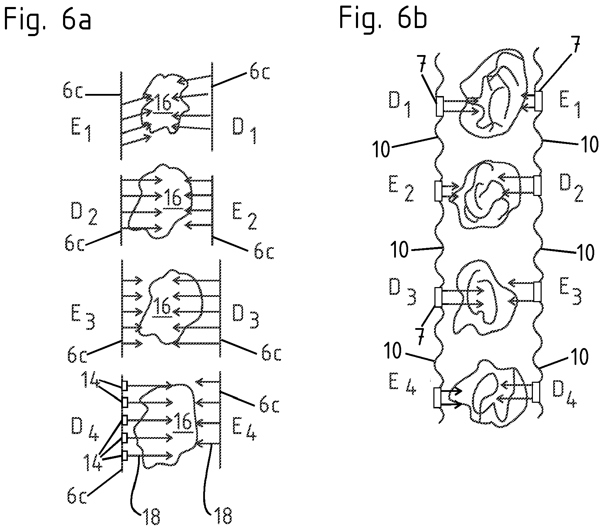

Fig. 6a und b zeigen die Grundrissdarstellung, die sich aus dem Schnitt VI - VI in Fig. 5 ergibt. Es handelt sich um beidseitig an den Obstbäumen 16 bzw. Weinstöcken entlang gleitende Wände, die in Fig. 6a aus dicht nebeneinander angeordneten Platten 6 und in alternativer Ausgestaltung gemäß Fig. 6b aus Leisten 7 mit dazwischen angeordneten Planen bzw. Folien 10 bestehen. Um die Benetzung der Obstbäume 16 zu intensivieren und die Abdrift zu verringern, ist es in einer besonders vorteilhaften Ausführungsform der Erfindung möglich, den Druckmittelstrom 18 alternierend als (D1), (D2), (D3) und (D4) gegensinnig hintereinander zu erzeugen und auf der jeweiligen Gegenseite (E1), (E2), (E3) und (E4) entweder ebenfalls einen Drucknebelstrom oder einen "sanften" Luftstrom aus übereinander und/oder nebeneinander angeordneten Düsen wirksam werden zu lassen, der verhindert, dass Drucknebel aus der Pflanzenseite austritt, die den jeweiligen Düsen 14 gegenüber liegt. Durch dieses "Gegenstromprinzip" erfolgt eine besonders gute Benetzung innerhalb der Pflanze. Gleichzeitig ergibt sich eine Verminderung des Spritzmittelverbrauchs. Wie schon bei herkömmlichen Spritzeinrichtungen bekannt, wird beim Entlangfahren an den Obstbaum bzw. Weinstockreihen der Drucknebelstrom 18, d.h. die Beaufschlagung der Düsen 14, beim Durchfahren der Zwischenräume zwischen den einzelnen Obstbäumen zeitlich unterbrochen.

Die erfindungsgemäße Vorrichtung kann wie hier dargestellt hinter einem Traktor 3 gezogen werden oder auch selbstfahrend, insbesondere vollautomatisiert ausgebildet sein. Insbesondere kann die Vorrichtung auch Spritzmittelfahrzeug oder Spritzmittelanhänger genannt werden.

In den Figuren 1 bis 6 jeweils dargestellte linke und rechte Ausgestaltungsvarianten sind hier der schnellen Übersichtlichkeit halber mit Platten 6 bzw. Leisten 7 dargestellt. Bevorzugt ist jedoch bei der Ausbildung einer erfindungsgemäßen Vorrichtung jeweils auf beiden Seiten eine gleiche Anordnung ausgebildet, also sind auf beiden Seiten bevorzugt Platten 6 angeordnet oder auf beiden Seiten Leisten 7 die optional über Folien 10 verbunden sind angeordnet.

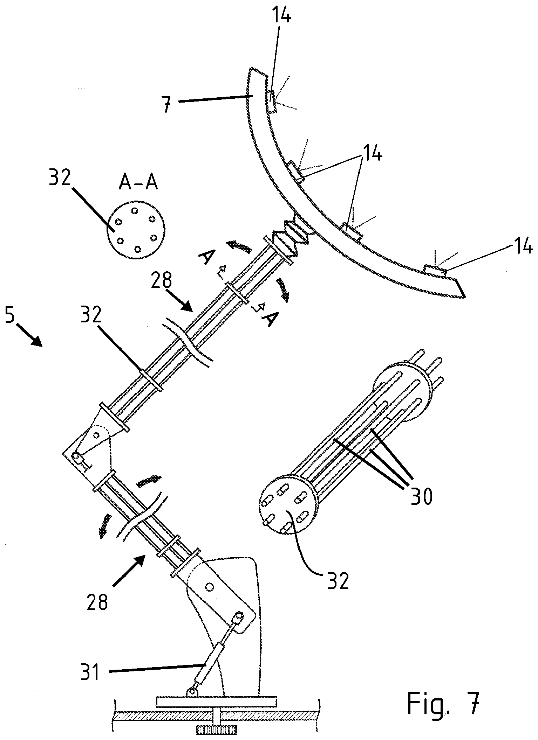

Gemäß Figur 7 weist der Arm 5 zwei gelenkig miteinander verbundene Teilabschnitte, auch Armteil genannt, sowie eine drehbar gelagerte Basisplatte auf. Druckluftzylinder oder andere Aktoren 31 sorgen für schnelle Bewegungsabläufe. Um hohe Formsteifigkeit bei geringem Gewicht zu erreichen, sind vorzugsweise sechs Rohre 30 auf einem Kreis angeordnet. In bestimmten Abständen sorgen Stabilisierungsplatten 32 für eine hohe Formsteifigkeit. Am freien Ende des Pflückarmes befindet sich eine Leiste 7 mit daran befestigten Düsen 14.

### Bezugszeichen:

- 1 -: Tank
- 2a -: Fahrgestell
- 2b -: Deichsel
- 3 -: Traktor
- 4 -: Montageplatte
- 5 -: Arm
- 6 -: Platte
- 6a -: Segment zu 6
- 6b -: Segment zu 6
- 6c -: Segment zu 6
- 6d -: Segment zu 6
- 7 -: Leiste
- 7a -: Segment zu 7
- 7b -: Segment zu 7
- 7c -: Segment zu 7
- 7d -: Segment zu 7
- 8 -: Gelenk
- 9 -: Pumpe
- 10 -: Folie
- 11 -: Platte
- 12 -: Platte
- 13 -: Querverbindung
- 14 -: Düse
- 15 -: Längsrichtung
- 16 -: Obstbäume
- 17 -: Spritzmittelleitung
- 18 -: Drucknebelstrom
- 19 -: Tröpfchen
- 20 -: Ausleger
- 21 -: Scheibe
- 22 -: Pfeil
- 23 -: Außenkontur zu 16
- 24 -: Trägerarm
- 25 -: Querbrücke
- 26 -: Sammelrinne
- 27 -: abgewandte Seite
- 28 -: Teilabschnitt zu 5
- 29 -: Teilabschnitt zu 5
- 30 -: Rohr
- 31 -: Aktor
- 32 -: Stabilisierungsplatten

- A -: Abstand
- A7 -: Abstand
- B -: Bereich
- V -: Vorrichtung

## Patentansprüche

1. Vorrichtung zum Bespritzen von Obstbäumen (16) bzw. Weinstöcken, insbesondere Apfelbäumen, aufweisend ein Fahrgestell (2) mit einem Tank (1), einem Druckerzeuger und Düsen (14) zum Ausbringen eines Spritzmittels, **dadurch gekennzeichnet, dass** auf dem Fahrgestell (2) eine Montageplatte (4) angeordnet ist und auf der Montageplatte (4) in ihrer Lage verstellbare Arme (5) angeordnet sind, wobei an einem Ende der Arme (5) in ihrer Kontur verstellbare längliche Leisten (7) und/oder Platten (6) angeordnet sind und in einem Abstand (A) zueinander auf den Leisten (7) und/oder Platten (6) Düsen (14) angeordnet sind, wobei die Leisten (7) und/oder Platten (6) in ihrer Kontur an die Außenkontur (23) zu besprühender Obstbäume (16) bzw. Weinstöcke einstellbar sind.

2. Vorrichtung nach Anspruch 1, **dadurch gekennzeichnet, dass** in Reihe hintereinander auf jeder Seite des Fahrgestells Arme (5), bevorzugt zwei, drei oder vier Arme (5), angeordnet sind.

3. Vorrichtung nach Anspruch 1 oder 2, **dadurch gekennzeichnet, dass** zwischen den Leisten (7) und/oder Platten (6) eine Folie (10) angeordnet ist, so dass sich an jeder Seite der Vorrichtung eine Schutzwand ergibt.

4. Vorrichtung nach einem der Ansprüche 1 bis 3, **dadurch gekennzeichnet, dass** die Düsen (14) mit einem Betriebsdruck von 8 bis 20MPa arbeiten und die Obstbäume (16) bzw. Weinstöcke mit einem aus den Düsen (14) direkt austretendem Drucknebel bespritzt werden.

5. Vorrichtung nach einem der Ansprüche 1 bis 4, **dadurch gekennzeichnet, dass** die Leisten (7) und/oder Platten (6) in Vertikalrichtung mehrere Segmente (7a, 7b, 7c, 7d, 6a, 6b, 6c, 6d) aufweisen, wobei zwischen den Segmenten (7a, 7b, 7c, 7d, 6a, 6b, 6c, 6d) arretierbare Gelenke (8) angeordnet sind.

6. Vorrichtung nach einem der Ansprüche 1 bis 5, **dadurch gekennzeichnet, dass** die Montageplatte (4) in Draufsicht U-förmig ausgebildet ist.

7. Vorrichtung nach einem der Ansprüche 1 bis 6, **dadurch gekennzeichnet, dass** mindestens ein den Obstbaum (16) bzw. Weinstock übergreifender Ausleger (20) vorhanden ist, welcher eine Leiste (7) und/oder Platte (6) auf der der Vorrichtung abgewandten Seite (27) des Obstbaumes (16) bzw. Weinstockes anordnet und von dort bespritzt.

8. Vorrichtung nach einem der Ansprüche 1 bis 7, **dadurch gekennzeichnet, dass** die Obstbäume (16) von einer Seite direkt angespritzt werden und von der abgewandten Seite (27) ein Luftstrom zur Verteilung des Spritzmittels in die Obstbäume (16) bzw. Weinstöcke geblasen wird.

9. Vorrichtung nach einem der Ansprüche 1 bis 8, **dadurch gekennzeichnet, dass** die Leisten (7) und/oder Platten (6) aus metallischem Werkstoff oder aus einem Kunststoffwerkstoff ausgebildet sind.

10. Vorrichtung nach dem vorhergehenden Anspruch, **dadurch gekennzeichnet, dass** die Leisten (7) und/oder Platten (6) plastisch reversibel verformbar sind, und an die Außenkontur (23) der Obstbäume (16) bzw. Weinstöcke anpassbar sind.

## Claims

1. Device for spraying fruit trees (16) or grapevines, in particular apple trees, comprising a chassis (2) with a tank (1), a pressure generator and nozzles (14) for dispensing a spraying agent, **characterised in that** a mounting plate (4) is arranged on the chassis (2) and arms (5) adjustable in their position are arranged on the mounting plate (4), wherein elongate strips (7) and/or plates (6) adjustable in their contour are arranged at one end of the arms (5) and nozzles (14) are arranged at a distance (A) from one another on the strips (7) and/or plates (6), wherein the strips (7) and/or plates (6) are adaptable in their contour to the outer contour (23) of fruit trees (16) or grapevines to be sprayed.

2. Device according to claim 1, **characterised in that** arms (5), preferably two, three or four arms (5), are arranged in series one behind the other on each side of the chassis.

3. Device according to claim 1 or 2, **characterised in that** a foil (10) is arranged between the strips (7) and/or plates (6) so that a protective wall is formed on each side of the device.

4. Device according to any one of claims 1 to 3, **characterised in that** the nozzles (14) work at an operating pressure of 8 to 20 MPa and the fruit trees (16) or grapevines are sprayed with a pressure mist emerging directly from the nozzles (14).

5. Device according to any one of claims 1 to 4, **characterised in that** the strips (7) and/or plates (6) have a plurality of segments (7a, 7b, 7c, 7d, 6a, 6b, 6c, 6d) in the vertical direction, lockable joints (8) being arranged between the segments (7a, 7b, 7c, 7d, 6a, 6b, 6c, 6d).

6. Device according to any one of claims 1 to 5, **characterised in that** the mounting plate (4) is U-shaped in plan view.

7. Device according to any one of claims 1 to 6, **characterised in that** at least one boom (20) is provided which extends over the fruit tree (16) or grapevine and which arranges a strip (7) and/or plate (6) on the side (27) of the fruit tree (16) or vine facing away from the device and sprays from there.

8. Device according to any one of claims 1 to 7, **characterised in that** the fruit trees (16) is sprayed directly from one side and from the side (27) facing away an air stream for distributing the spraying agent is blown into the fruit tree (16) or grapevine.

9. Device according to any one of claims 1 to 8, **characterised in that** the strips (7) and/or plates (6) are formed from metallic material or from a plastics material.

10. Device according to the preceding claim, **characterised in that** the strips (7) and/or plates (6) are plastically reversibly deformable and can be adapted to the outer contour (23) of the fruit trees (16) or grapevines.

## Revendications

1. Dispositif destiné à pulvériser des arbres fruitiers (16) ou des vignes, en particulier des pommiers, comprenant un châssis (2) muni d'un réservoir (1), d'un générateur de pression et de buses (14) pour répandre un liquide de pulvérisation, **caractérisé en ce que** sur le châssis (2) est disposé une plaque de montage (4) et sur la plaque de montage (4) sont disposés dans leur position des bras réglables (5), à une extrémité des bras (5) dans leur contour étant disposées des barrettes allongées réglables (7) et/ou des plaques (6) et des buses (14) étant disposées à une distance (A) les unes des autres sur les barrettes (7) et/ou les plaques (6), les barrettes (7) et/ou les plaques (6) étant réglables dans leur contour au niveau du contour externe (23) des arbres fruitiers (16) ou des vignes à pulvériser.

2. Dispositif selon la revendication 1, **caractérisé en ce que** des bras (5), de préférence deux, trois ou quatre bras (5) sont disposés en rang les uns derrière les autres de chaque côté du châssis.

3. Dispositif selon la revendication 1 ou 2, **caractérisé en ce qu'**un film (10) est disposé entre les barrettes (7) et/ou les plaques (6), de sorte qu'une paroi de protection existe de chaque côté du dispositif.

4. Dispositif selon l'une quelconque des revendications 1 à 3, **caractérisé en ce que** les buses (14) fonctionnent à une pression de fonctionnement de 8 à 20 MPa et les arbres fruitiers (16) ou vignes sont pulvérisés avec une brume de pression sortant directement des buses (14).

5. Dispositif selon l'une quelconque des revendications 1 à 4, **caractérisé en ce que** les barrettes (7) et/ou plaques (6) présentent dans la direction verticale plusieurs segments (7a, 7b, 7c, 7d, 6a, 6b, 6c, 6d), des articulations verrouillables (8) étant disposées entre les segments (7a, 7b, 7c, 7d, 6a, 6b, 6c, 6d).

6. Dispositif selon l'une quelconque des revendications 1 à 5, **caractérisé en ce que** la plaque de montage (4) est formée en vue de dessus en forme de U.

7. Dispositif selon l'une quelconque des revendications 1 à 6, **caractérisé en ce qu'**il existe au moins une perche transversale (20) à l'arbre fruitier (16) ou la vigne, laquelle positionne une barrette (7) et/ou une plaque (6) sur le côté opposé (27) au dispositif de l'arbre fruitier (16) ou de la vigne et pulvérise depuis celle-ci.

8. Dispositif selon l'une quelconque des revendications 1 à 7, **caractérisé en ce que** les arbres fruitiers (16) est pulvérisé directement depuis un côté et depuis le côté opposé (27) un courant d'air est soufflé pour permettre de répartir le liquide de pulvérisation dans les arbres fruitiers (16) ou les vignes.

9. Dispositif selon l'une quelconque des revendications 1 à 8, **caractérisé en ce que** les barrettes (7) et/ou les plaques (6) sont formées à partir d'un matériau métallique ou à partir d'une matière plastique.

10. Dispositif selon l'une quelconque des revendications précédentes, **caractérisé en ce que** les barrettes (7) et/ou les plaques (6) sont déformables de manière plastiquement réversible, et sont adaptables sur le contour externe (23) des arbres fruitiers (16) ou des vignes.
